# DEMANDE DE BREVET EUROPEEN

(11) **EP 4 539 386 A1**
(43) Date de publication de la demande: **16.04.2025**
(21) Numéro de dépôt: 24202767.0
(22) Date de dépôt: 26.09.2024
(51) Int. Cl.: H04L 9/00

(54) **SYSTÈME DE LECTURE D'UNE CLÉ DE CHIFFREMENT/DÉCHIFFREMENT ET PROCÉDÉ ASSOCIÉ**

(30) Priorité: 09.10.2023 FR 2310780
(71) Demandeur: STMicroelectronics International N.V., 1228 Plan-les-Ouates, Geneva (CH)
(72) Inventeur: GRIL-MAFFRE, Jean-Michel, 13090 AIX EN PROVENCE (FR); EVA, Christophe, 13790 ROUSSET (FR)
(74) Mandataire: Casalonga

(57) **Abrégé**

Le système de lecture d'une clé de chiffrement/déchiffrement (10) comporte au moins un premier mot (32) comprenant une pluralité de bits (B31, B32, B33, B34, B35, B36, B37, B38), le système comportant :
- un premier moyen de comparaison (21),
- un premier moyen de délivrance (12),
- un deuxième moyen de comparaison (22), et
- un deuxième moyen de délivrance (13).

## Description

Des modes de réalisation et de mise en oeuvre concernent la lecture d'une clef de chiffrement/déchiffrement stockée dans une mémoire, en particulier la sécurisation de la lecture de ladite clef.

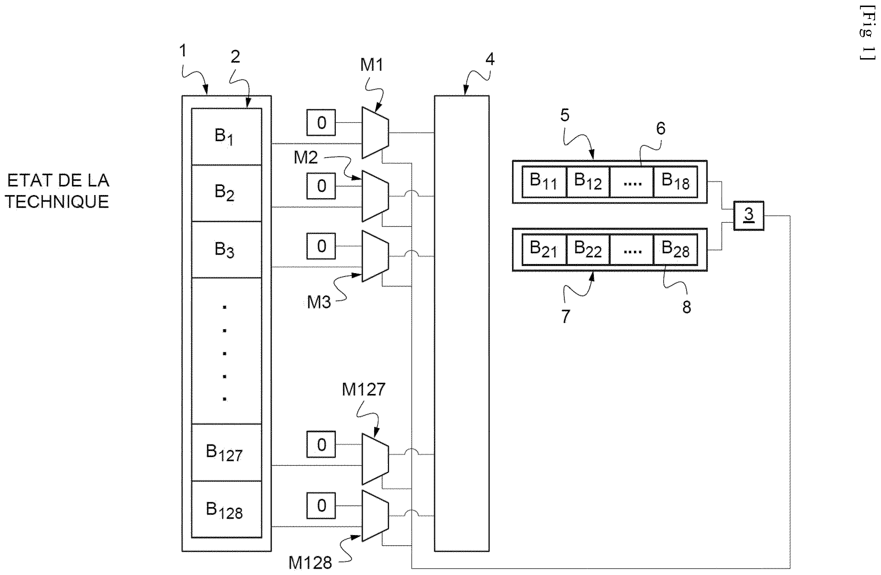

La figure 1 illustre schématiquement un exemple d'un système de sauvegarde d'une clé utilisée par exemple pour des opérations de chiffrement/déchiffrement tel que connu de l'état de la technique.

Le système de sauvegarde comprend une première mémoire 1 stockant une clé 2 de chiffrement/déchiffrement comportant des bits B₁, B₂, B₃, B₁₂₇, B₁₂₈.

La clé 2 comporte par exemple cent vingt-huit bits.

Le système comporte en outre autant de multiplexeurs M1, M2, M3, M127, M128 que de bits de la clé 2.

Chaque multiplexeur M1, M2, M3, M127, M128 comprend une première entrée reliée à la première mémoire 1 pour lire un bit B₁, B₂, B₃, B₁₂₇, B₁₂₈ de la clé 2 et une deuxième entrée reliée à un état logique bas, par exemple un booléen « 0 ».

Chaque multiplexeur M1, M2, M3, M127, M128 comprend en outre une entrée de commande reliée à une sortie d'un comparateur 3 et une sortie reliée à un premier registre 4.

Le système comporte en outre une deuxième mémoire 5 stockant une clé d'accès 6 comportant une succession de bits B₁₁, B₁₂, B₁₈ et un deuxième registre 7 stockant un mot 8 comportant une succession de bits B₂₁, B₂₂, B₂₈.

Le mot 8 est par exemple délivré par un bus relié au deuxième registre 7 lorsqu'un accès à la clé de chiffrement/déchiffrement 2 est requis.

Lorsque les bits B₂₁, B₂₂, B₂₈ contenus dans le deuxième registre 7 sont identiques à la clé d'accès 6, le comparateur 3 délivre un état logique haut sur sa sortie de sorte que chaque multiplexeur M1, M2, M3, M127, M128 délivre sur sa sortie un bit B₁, B₂, B₃, B₁₂₇, B₁₂₈ de la clé de chiffrement/déchiffrement 2, les bits délivrés par les multiplexeurs M1, M2, M3, M127, M128 étant stockés dans le registre 4 pour une utilisation ultérieure de la clé de chiffrement/déchiffrement 2 stockée dans le premier registre 4.

Lorsqu'au moins l'un des bits B₂₁, B₂₂, B₂₈ contenu dans le deuxième registre 7 est différent des bits B₁₁, B₁₂, B₁₈ de la clé d'accès 6, le comparateur 3 délivre un état logique bas sur sa sortie de sorte que chaque multiplexeur M1, M2, M3, M127, M128 délivre sur sa sortie un bit à l'état bas « 0 » permettant de déduire que le mot stocké dans le deuxième registre 7 ne permet pas la lecture de la clé de chiffrement/déchiffrement 2. L'observation de la sortie des multiplexeurs M1, M2, M3, M127, M128 permet de déduire qu'ils ne délivrent pas des bits de la clé 2 de chiffrement/déchiffrement.

Comme l'ensemble des multiplexeurs M1, M2, M3, M127, M128 sont commandés par le comparateur 3, il suffit de mener une attaquer mettant en oeuvre par exemple un laser dirigé sur la sortie du comparateur 3 ou sur une piste reliant la sortie du comparateur 3 aux multiplexeurs M1, M2, M3, M127, M128 pour forcer un état logique haut à l'entrée de commande des multiplexeurs M1, M2, M3, M127, M128 de sorte que les multiplexeurs M1, M2, M3, M127, M128 délivrent sur leur sortie la clé de chiffrement /déchiffrement 2.

Ainsi, il existe un besoin de proposer des systèmes de lecture de clé résistant à des attaques mettant en oeuvre un laser.

Les modes de mise en oeuvre et de réalisation définis ci-après, sont proposés à ces égards, et permettent à un système de lecture de ne pas délivrer la clé de chiffrement/déchiffrement lors d'une attaque mettant en oeuvre un laser.

Selon un aspect, il est proposé un procédé de lecture d'une clé de chiffrement/déchiffrement comportant au moins un premier mot comprenant une pluralité de bits, le procédé comportant :
- une première comparaison d'un premier ensemble de bit d'un mot de déverrouillage comportant une pluralité de bits et d'un premier ensemble de bit d'une clé d'accès, le premier ensemble de bit de la clé d'accès comportant au moins un premier bit de la pluralité de bits de la clé d'accès,
- une délivrance d'au moins un premier ensemble de bits du premier mot de la clé de chiffrement/déchiffrement si le premier ensemble de bit du mot de déverrouillage est identique au premier ensemble de bit de la clé d'accès, le premier ensemble de bits étant choisi parmi la pluralité de bits du premier mot,
- au moins une deuxième comparaison d'un deuxième ensemble de bit du mot de déverrouillage différent du premier ensemble de bit du mot de déverrouillage et d'un deuxième ensemble de bit de la clé d'accès, le deuxième ensemble de bit de la clé d'accès comportant au moins un deuxième bit de la pluralité de bits de la clé d'accès différent du premier bit, et
- une délivrance d'au moins un deuxième ensemble de bits du premier mot de la clé de chiffrement/déchiffrement si le deuxième ensemble de bit du mot de déverrouillage est identique au deuxième ensemble de bit de la clé d'accès, le deuxième ensemble de bits étant choisi parmi la pluralité de bits du premier mot et différents des bits du premier ensemble de bits, la réunion des ensembles de bits du premier mot formant le premier mot.

Pour obtenir la totalité de la clé de chiffrement/déchiffrement, il est nécessaire de remplir deux conditions différentes. Il est nécessaire que le premier ensemble de bit du mot de déverrouillage soit identique au premier ensemble de bit de la clé d'accès pour obtenir une première partie de la clé et il est nécessaire que le deuxième ensemble de bit du mot de déverrouillage soit identique au deuxième ensemble de bit de la clé d'accès pour obtenir une deuxième partie de la clé.

Lors d'une attaque, il est nécessaire de mettre en oeuvre deux lasers pour forcer la délivrance de la clé par les premier et deuxième moyens de délivrance rendant ainsi plus robuste le système de lecture par rapport à système de lecture connu de l'état de la technique.

Selon un mode de mise en oeuvre, la clé de chiffrement/déchiffrement comporte au moins un deuxième mot comprenant une pluralité de bits, le procédé comporte :
- une délivrance d'au moins un premier ensemble de bits du deuxième mot de la clé de chiffrement/déchiffrement lorsque le premier ensemble de bit du mot de déverrouillage est identique au premier ensemble de bit de la clé d'accès, le premier ensemble de bits du deuxième mot étant choisi parmi la pluralité de bits du deuxième mot, et
- une délivrance d'au moins un deuxième ensemble de bits du deuxième mot de la clé de chiffrement/déchiffrement si le deuxième ensemble de bit du mot de déverrouillage est identique au deuxième ensemble de bit de la clé d'accès, le deuxième ensemble de bits du deuxième mot étant choisi parmi la pluralité de bits du deuxième mot et différents des bits du premier ensemble de bits du deuxième mot, la réunion des ensembles de bits du deuxième mot formant le deuxième mot et les premier et deuxième mots formant la clé de chiffrement/déchiffrement.

Selon un mode de mise en oeuvre, les bits d'au moins un ensemble de bits de la clé de chiffrement/déchiffrement sont choisis de sorte que lesdits bits ne se succèdent pas.

Selon un mode de mise en oeuvre, lorsqu'un ensemble de bit du mot de déverrouillage n'est pas identique à un ensemble de bit de la clé d'accès, le procédé comporte une délivrance d'un ensemble de bits prédéterminés ayant la même taille que l'ensemble de bits associé à ladite comparaison.

Selon un mode de mise en oeuvre, le premier ensemble de bit de la clé d'accès comporte le premier bit de la clé d'accès et une première combinaison de bits choisis parmi la pluralité de bits de la clé d'accès, les bits de la première combinaison étant différents des premier et deuxième bits de la clé d'accès, et le deuxième ensemble de bit de la clé d'accès comporte le deuxième bit et une deuxième combinaison de bits choisis parmi la pluralité de bits du mot de déverrouillage, les bits de la deuxième combinaison étant différents du premier bit, du deuxième bit et des bits de la première combinaison.

Selon un autre aspect, il est également proposé un système de lecture d'une clé de chiffrement/déchiffrement comportant au moins un premier mot comprenant une pluralité de bits, le système comportant :
- un premier moyen de comparaison configuré pour comparer un premier ensemble de bit d'un mot de déverrouillage comportant une pluralité de bits et d'un premier ensemble de bit d'une clé d'accès, le premier ensemble de bit de la clé d'accès comportant au moins un premier bit de la pluralité de bits de la clé d'accès,
- un premier moyen de délivrance configuré pour délivrer au moins un premier ensemble de bits du premier mot de la clé de chiffrement/déchiffrement si le premier ensemble de bit du mot de déverrouillage est identique au premier ensemble de bit de la clé d'accès, le premier ensemble de bits étant choisi parmi la pluralité de bits du premier mot,
- un deuxième moyen de comparaison configuré pour comparer un deuxième ensemble de bit du mot de déverrouillage différent du premier ensemble de bit du mot de déverrouillage et d'un deuxième ensemble de bit de la clé d'accès, le deuxième ensemble de bit de la clé d'accès comportant au moins un deuxième bit de la pluralité de bits de la clé d'accès différent du premier bit, et
- un deuxième moyen de délivrance configuré pour délivrer au moins un deuxième ensemble de bits du premier mot de la clé de chiffrement/déchiffrement si le deuxième ensemble de bit du mot de déverrouillage est identique au deuxième ensemble de bit de la clé d'accès, le deuxième ensemble de bits étant choisi parmi la pluralité de bits du premier mot et différents des bits du premier ensemble de bits, la réunion des ensembles de bits du premier mot formant le premier mot.

Selon un mode de réalisation, la clé de chiffrement/déchiffrement comporte au moins un deuxième mot comprenant une pluralité de bits, le système comportant :
- un troisième moyen de délivrance configuré pour délivrer au moins un premier ensemble de bits du deuxième mot de la clé de chiffrement/déchiffrement si le premier ensemble de bit du mot de déverrouillage est identique au premier ensemble de bit de la clé d'accès, le premier ensemble de bits étant choisi parmi la pluralité de bits du premier mot, et
- un quatrième moyen de délivrance configuré pour délivrer au moins un deuxième ensemble de bits du deuxième mot de la clé de chiffrement/déchiffrement si le deuxième ensemble de bit du mot de déverrouillage est identique au deuxième ensemble de bit de la clé d'accès, le deuxième ensemble de bits étant choisi parmi la pluralité de bits du premier mot et différents des bits du premier ensemble de bits, la réunion des ensembles de bits du deuxième mot formant le premier mot.

Selon un mode de réalisation, les bits d'au moins un ensemble de bits de la clé de chiffrement/déchiffrement sont choisis de sorte que lesdits bits ne se succèdent pas.

Selon un mode de réalisation, au moins un moyen de délivrance est configuré pour délivrer un ensemble de bits prédéterminés lorsque l'ensemble de bit du mot de déverrouillage associé audit moyen de délivrance n'est pas identique à un ensemble de bit de la clé d'accès, l'ensemble de bits prédéterminés ayant la même taille que l'ensemble de bits associé à ladite comparaison.

Selon un mode de réalisation, le premier ensemble de bit de la clé d'accès comporte le premier bit de la clé d'accès et une première combinaison de bits choisis parmi la pluralité de bits de la clé d'accès, les bits de la première combinaison étant différents des premier et deuxième bits de la clé d'accès, et le deuxième ensemble de bit de la clé d'accès comporte le deuxième bit et une deuxième combinaison de bits choisis parmi la pluralité de bits du mot de déverrouillage, les bits de la deuxième combinaison étant différents du premier bit, du deuxième bit et des bits de la première combinaison.

D'autres avantages et caractéristiques de l'invention apparaîtront à l'examen de la description détaillée de modes de réalisation et de mise en oeuvre, nullement limitatifs, et des dessins annexés sur lesquels:
[Fig.1] illustre un système de lecture d'une clé selon l'état de la technique, et
[Fig.2] ;
[Fig.3] ;
   illustrent des modes de réalisation et de mise en oeuvre de l'invention.

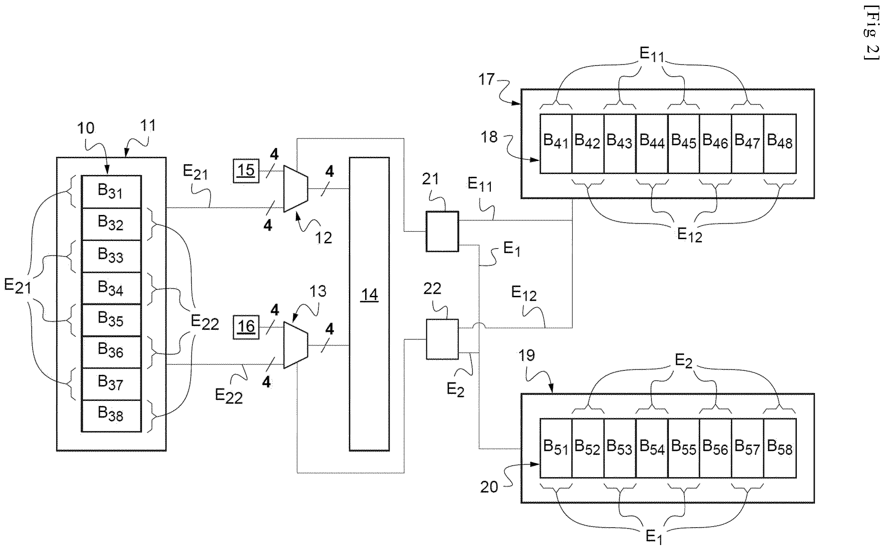

La figure 2 illustre un premier exemple de réalisation d'un système de lecture d'une clé de chiffrement/déchiffrement 10.

Pour de soucis de clarté, on suppose dans cet exemple que la clé de chiffrement/déchiffrement 10 comporte un premier mot de huit bits B₃₁ à B₃₈.

Le premier mot forme la clé de chiffrement/déchiffrement 10.

La clé chiffrement/déchiffrement 10 est stockée dans une première mémoire 11 reliée à un premier moyen de délivrance 12 et à un deuxième moyen de délivrance 13.

Chaque moyen de délivrance 12, 13 comporte une première entrée reliée à la première mémoire 11, une deuxième entrée et une sortie reliée à un premier registre 14.

La deuxième entrée du premier moyen de délivrance 12 est par exemple reliée à une troisième mémoire 15 et la deuxième entrée du deuxième moyen de délivrance 13 est par exemple reliée à une quatrième mémoire 16.

Comme représenté, chaque moyen de délivrance 12, 13 comporte par exemple un multiplexeur comportant une première entrée reliée à la première entrée du moyen de délivrance 12, 13, une deuxième entrée reliée à la deuxième entrée du moyen de délivrance 12, 13, et une sortie reliée à la sortie du moyen de délivrance 12, 13.

En variante, chaque moyen de délivrance 12, 13 peut être réalisé à partir de portes logiques.

Le système comporte en outre une quatrième mémoire 17 stockant une clé d'accès 18 comportant par exemple huit bits B₄₁ à B₄₈, un deuxième registre 19 stockant un mot de déverrouillage 20 comportant le même nombre de bits B₅₁ à B₅₈ que la clé d'accès 18.

Le système comporte en outre un premier moyen de comparaison 21 et un deuxième moyen de comparaison 22.

Chaque moyen de comparaison 21, 22 comporte par exemple un comparateur réalisé à partir de portes logiques.

Une première entrée de chaque moyen de comparaison 21, 22 est reliée à la quatrième mémoire 17 et une première entrée de chaque moyen de comparaison 21, 22 est reliée au deuxième registre 19.

Une sortie du premier moyen de comparaison 21 est reliée à une entrée de commande du premier moyen de délivrance 12 et une sortie du deuxième moyen de comparaison 22 est reliée à une entrée de commande du deuxième moyen de délivrance 13.

A présent, un procédé de mise en oeuvre du premier exemple du système de lecture est décrit.

Lorsque le mot de déverrouillage 20 est stocké dans le deuxième registre 19, le premier moyen de comparaison 21 compare un premier ensemble E1 de bit du mot de déverrouillage 20 et un premier ensemble E11 de bit de la clé d'accès 18, et le deuxième moyen de comparaison 22 compare un deuxième ensemble E2 de bit du mot de déverrouillage 20 et un deuxième ensemble E12 de bit de la clé d'accès 18.

Le premier ensemble E1 de bit du mot de déverrouillage 20 comprend au moins un premier bit de la pluralité des bits du mot de déverrouillage 20 et le premier ensemble E11 de bit de la clé d'accès 18 comprend au moins un premier bit de la pluralité des bits de la clé d'accès 18.

Le deuxième ensemble E2 de bit du mot de déverrouillage 20 comprend au moins un deuxième bit de la pluralité des bits du mot de déverrouillage 20 différent du premier bit du mot de déverrouillage 20 et le deuxième ensemble E12 de bit de la clé d'accès 18 comprend au moins un deuxième bit de la pluralité des bits de la clé d'accès 18 différent du premier bit de la clé d'accès 18.

Si le premier ensemble de bit E1 du mot de déverrouillage 20 est identique au premier ensemble E11 de bit de la clé d'accès 18, le premier moyen de comparaison 21 pilote le premier moyen de délivrance 12 de sorte qu'il délivre un premier ensemble E21 de bits du premier mot de la clé de chiffrement/déchiffrement 10.

Le premier ensemble E21 de bits du premier mot de la clé de chiffrement/déchiffrement 10 délivré est par exemple stocké dans le premier registre 14.

De manière similaire, si le deuxième ensemble de bit E2 du mot de déverrouillage 20 est identique au deuxième ensemble E12 de bit de la clé d'accès 18, le deuxième moyen de comparaison 22 pilote le deuxième moyen de délivrance 13 de sorte qu'il délivre un deuxième ensemble E22 de bits du premier mot de la clé de chiffrement/déchiffrement 10.

Le deuxième ensemble E22 de bits du premier mot de la clé de chiffrement/déchiffrement 10 délivré est par exemple stocké dans le premier registre 14.

Le premier ensemble E21 de bits du premier mot de la clé de chiffrement/déchiffrement 10 et deuxième ensemble E22 de bits du premier mot de la clé de chiffrement/déchiffrement 10 forment la clé de chiffrement/déchiffrement 10.

Pour obtenir la totalité de la clé de chiffrement/déchiffrement 10, il est nécessaire de remplir deux conditions différentes. Il est nécessaire que le premier ensemble de bit E1 du mot de déverrouillage 20 soit identique au premier ensemble E11 de bit de la clé d'accès 18 pour obtenir une première partie de la clé 10 et il est nécessaire que le deuxième ensemble de bit E2 du mot de déverrouillage 20 soit identique au deuxième ensemble E12 de bit de la clé d'accès 18 pour obtenir une deuxième partie de la clé 10.

Lors d'une attaque, il est nécessaire de mettre en oeuvre deux lasers pour forcer la délivrance de la clé 10 par les premier et deuxième moyens de délivrance rendant ainsi plus robuste le système de lecture par rapport à système de lecture connu de l'état de la technique.

Afin de sécuriser encore plus le système de lecture, le premier ensemble E11 de bit de la clé d'accès 18 comporte le premier bit et une première combinaison de bits choisis parmi la pluralité de bits du mot de déverrouillage, et le deuxième ensemble E12 de bit de la clé d'accès 18 comporte le deuxième bit et une deuxième combinaison de bits choisis parmi la pluralité de bits du mot de déverrouillage.

Les bits de la deuxième combinaison sont différents du premier bit, du deuxième bit et des bits de la première combinaison.

De plus, les bits de la première combinaison peuvent ne pas se succéder et les bits de la deuxième combinaison peuvent ne pas se succéder.

Par exemple, le premier ensemble E11 de bit de la clé d'accès 18 comporte le premier bit B₄₁ et la première combinaison de bits comporte les bits B₄₃, B₄₅, B₄₇, et le deuxième ensemble E12 de bit de la clé d'accès 18 comporte le deuxième bit B₄₂ et la première combinaison de bits comporte les bits B₄₄, B₄₆, B₄₈.

Afin de sécuriser encore plus le système de lecture lors d'une attaque lorsque l'un des moyens de délivrance 12, 13 est forcé à délivrer le premier ensemble E21 de bits du premier mot de la clé de chiffrement/déchiffrement 10 ou le deuxième ensemble E22 de bits du premier mot de la clé de chiffrement/déchiffrement 10, les bits des premier et deuxième ensembles E21, E22 de bits du premier mot de la clé de chiffrement/déchiffrement 10 ne se succèdent pas de sorte que l'ordre des bits obtenus par l'attaque ne correspond pas à l'ordre desdits bits dans la clé de chiffrement/déchiffrement 10.

Bien entendu, en variante, seuls les bits de l'un des premier et deuxième ensembles E21, E22 de bits du premier mot de la clé de chiffrement/déchiffrement 10 peuvent ne pas se succéder.

Par exemple, le premier ensemble E21 de bits du premier mot de la clé de chiffrement/déchiffrement 10 comprend les bits B₃₁, B₃₃, B₃₅, B₃₇, et le deuxième ensemble E22 de bits du premier mot de la clé de chiffrement/déchiffrement 10 comprend les bits B₃₂, B₃₄, B₃₆, B₃₈.

Lorsque le premier ensemble E1 de bit du mot de déverrouillage 20 n'est pas identique au premier ensemble E11 de bit de la clé d'accès 18, le premier moyen de comparaison 21 peut commander le premier moyen de délivrance 12 de sorte qu'il délivre un ensemble de bits prédéterminés stocké dans la troisième mémoire 15.

L'ensemble de bits prédéterminés comporte le même nombre de bits que le nombre de bits contenus dans le premier ensemble E21 de bits du premier mot de la clé de chiffrement/déchiffrement 10 de sorte qu'il a la même taille que celui du premier ensemble E21. Chaque bit de l'ensemble de bits prédéterminés est dans un état logique haut ou bas de sorte que lorsque le premier ensemble E1 de bit du mot de déverrouillage 20 n'est pas identique au premier ensemble E11 de bit de la clé d'accès 18, l'ensemble de bits prédéterminés délivrés s'apparentent à une partie de la clé de chiffrement/déchiffrement 10 induisant en erreur un attaquant observant la sortie du premier moyen de délivrance 12.

De manière similaire, lorsque le deuxième ensemble E2 de bit du mot de déverrouillage 20 n'est pas identique au deuxième ensemble E12 de bit de la clé d'accès 18, le deuxième moyen de comparaison 22 peut commander le deuxième moyen de délivrance 13 de sorte qu'il délivre un ensemble de bits prédéterminés stocké dans la quatrième mémoire 16. L'ensemble de bits prédéterminés délivrés s'apparentent à une autre partie de la clé de chiffrement/déchiffrement 10 induisant en erreur un attaquant observant la sortie du deuxième moyen de délivrance 13.

Bien entendu, le premier mot peut comprendre plus ou moins de huit bits.

En variante, la clé de chiffrement/déchiffrement 10 peut être formée de plusieurs mots.

En variante, la clé d'accès peut comprendre plus ou moins de huit bits.

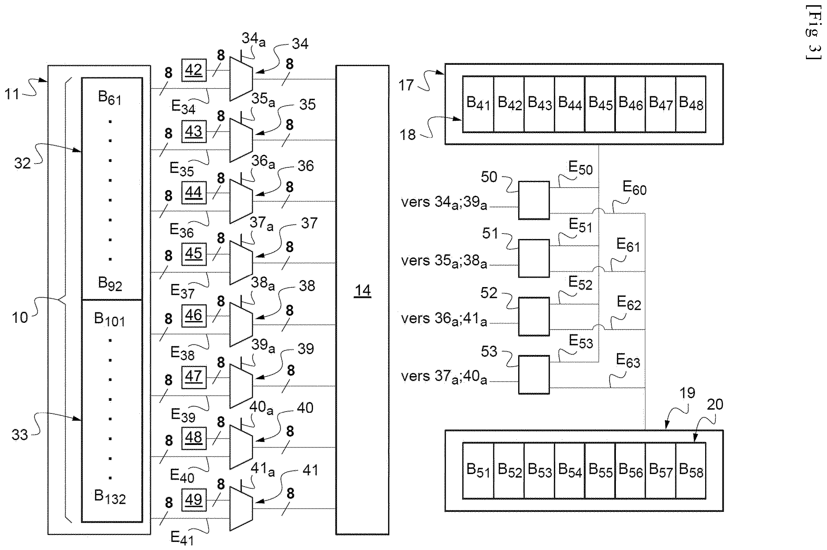

La figure 3 illustre un deuxième exemple de réalisation d'un système de lecture de clé de chiffrement/déchiffrement 10.

On retrouve la première mémoire 11, le premier registre 14, la quatrième mémoire 17 stockant la clé d'accès 18 comportant huit bits B₄₁ à B₄₈, et le deuxième registre 19 stockant le mot de déverrouillage 20 comportant les bits B₅₁ à B₅₈.

Dans cet exemple de réalisation, on suppose que la clé de chiffrement déchiffrement 10 est formé par un premier mot 32 comportant par exemple trente-deux bits référencés B₆₁ à B₉₂ et un deuxième mot 33 par exemple de trente-deux bits référencés B₁₀₁ à B₁₃₂ stockés dans la première mémoire 11.

Les premier et deuxième mots 32, 33 sont stockés dans la première mémoire 11.

La clé de chiffrement déchiffrement 10 comporte soixante-quatre bits.

Le système de lecture comporte un premier ensemble de moyens de délivrance pour délivrer les bits B₆₁ à B₉₂ du premier mot 32 un deuxième ensemble de moyens de délivrance pour délivrer les bits B₁₀₁ à B₁₃₂ du deuxième mot 33.

Le premier ensemble de moyens de délivrance comporte par exemple un premier moyen de délivrance 34, un deuxième moyen de délivrance 35, un troisième moyen de délivrance 36 et un quatrième moyen de délivrance 37.

Le deuxième ensemble de moyens de délivrance comporte par exemple un troisième moyen de délivrance 38, un quatrième moyen de délivrance 39, un premier moyen de délivrance 40 et un deuxième moyen de délivrance 41.

Chaque moyen de délivrance 34, 35, 36, 37, 38, 39, 40, 41 comporte une première entrée reliée à la première mémoire 11, une deuxième entrée, une sortie reliée à au premier registre 14 et une entrée de commande 34a, 35a, 36a, 37a, 38a, 39a, 40a, 41a.

La deuxième entrée du premier moyen de délivrance 34 du premier ensemble de moyens de délivrance est reliée à une cinquième mémoire 42, la deuxième entrée du deuxième moyen de délivrance 35 du premier ensemble de moyens de délivrance est reliée à une sixième mémoire 43, la deuxième entrée du troisième moyen de délivrance 36 du premier ensemble de moyens de délivrance est reliée à une septième mémoire 44 et la deuxième entrée du quatrième moyen de délivrance 37 du premier ensemble de moyens de délivrance est reliée à une huitième mémoire 45.

La deuxième entrée du troisième moyen de délivrance 38 du deuxième ensemble de moyens de délivrance est reliée à une neuvième mémoire 46, la deuxième entrée du quatrième moyen de délivrance 39 du deuxième ensemble de moyens de délivrance est reliée à une dixième mémoire 47, la deuxième entrée du premier moyen de délivrance 40 du deuxième ensemble de moyens de délivrance est reliée à une onzième mémoire 48 et la deuxième entrée du deuxième moyen de délivrance 41 du deuxième ensemble de moyens de délivrance est reliée à une douzième mémoire 49.

Comme représenté, chaque moyen de délivrance 34, 35, 36, 37, 38, 39, 40, 41 comporte par exemple un multiplexeur comportant une première entrée reliée à la première entrée du moyen de délivrance 34, 35, 36, 37, 38, 39, 40, 41, une deuxième entrée reliée à la deuxième entrée du moyen de délivrance 34, 35, 36, 37, 38, 39, 40, 41, et une sortie reliée à la sortie du moyen de délivrance 34, 35, 36, 37, 38, 39, 40, 41.

Le système de lecture comporte en outre un premier moyen de comparaison 50, un deuxième moyen de comparaison 51, un troisième moyen de comparaison 52 et un quatrième moyen de comparaison 53.

Chaque moyen de comparaison 50, 51, 52, 53 comporte une première entrée reliée à la quatrième mémoire 17, une deuxième entrée reliée au deuxième registre 19 et une sortie.

La sortie du premier moyen de comparaison 50 est reliée à l'entrée de commande 34a du premier moyen de délivrance 34 du premier ensemble de moyens de délivrance et reliée à l'entrée de commande 39a du quatrième moyen de délivrance 39 du deuxième ensemble de moyens de délivrance.

La sortie du deuxième moyen de comparaison 51 est reliée à l'entrée de commande 35a du deuxième moyen de délivrance 35 du premier ensemble de moyens de délivrance et reliée à l'entrée de commande 38a du troisième moyen de délivrance 38 du deuxième ensemble de moyens de délivrance.

La sortie du troisième moyen de comparaison 52 est reliée à l'entrée de commande 36a du troisième moyen de délivrance 36 du premier ensemble de moyens de délivrance et reliée à l'entrée de commande 41a du deuxième moyen de délivrance 41 du deuxième ensemble de moyens de délivrance.

La sortie du quatrième moyen de comparaison 53 est reliée à l'entrée de commande 37a du quatrième moyen de délivrance 37 du premier ensemble de moyens de délivrance et reliée à l'entrée de commande 40a du premier moyen de délivrance 40 du deuxième ensemble de moyens de délivrance.

A présent, un procédé de mise en oeuvre du deuxième exemple du système de lecture est décrit.

Lorsque le mot de déverrouillage 20 est stocké dans le deuxième registre 19, le premier moyen de comparaison 50 compare un premier ensemble E60 de bit du mot de déverrouillage 20 et un premier ensemble E50 de bit de la clé d'accès 18, le deuxième moyen de comparaison 51 compare un deuxième ensemble E61 de bit du mot de déverrouillage 20 et un deuxième ensemble E51 de bit de la clé d'accès 18, le troisième moyen de comparaison 52 compare un troisième ensemble E62 de bit du mot de déverrouillage 20 et un troisième ensemble E52 de bit de la clé d'accès 18, et le quatrième moyen de comparaison 53 compare un quatrième ensemble E63 de bit du mot de déverrouillage 20 et un quatrième ensemble E53 de bit de la clé d'accès 18.

Chaque ensemble des premier, deuxième, troisième et quatrième ensembles E50, E51, E52, E53 de bit de la clé d'accès 18 comporte au moins un bit de la pluralité des bits de la clé d'accès 18, chaque bit étant différent.

En variante, chaque ensemble des premier, deuxième, troisième et quatrième ensembles E50, E51, E52, E53 de bit de la clé d'accès 18 comporte une pluralité de bits de la clé d'accès 18, la pluralité de bits de chaque ensemble des premier, deuxième, troisième et quatrième ensembles E50, E51, E52, E53 étant différent.

On suppose dans ce qui suit que le premier ensemble E50 de bits de la clé d'accès 18 comprend les bits B₄₁, B₄₂, B₄₇, B₄₈, que le deuxième ensemble E51 de bits de la clé d'accès 18 comprend les bits B₄₃, B₄₄, B₄₅, B₄₆, que le troisième ensemble E52 de bit de la clé d'accès 18 comprend les bits B₄₁, B₄₄, B₄₅, B₄₈ et que le quatrième ensemble E53 de bit de la clé d'accès 18 comprend les bits B₄₂, B₄₃, B₄₆, B₄₇ de sorte que les bits de chaque ensemble E50, E51, E52, E53 ne se succèdent pas.

Si le premier ensemble de bit E60 du mot de déverrouillage 20 est identique au premier ensemble E50 de bit de la clé d'accès 18, le premier moyen de comparaison 50 pilote le premier moyen de délivrance 34 du premier ensemble de moyens de délivrance de sorte qu'il délivre un premier ensemble E34 de bits du premier mot 32 et pilote le quatrième moyen de délivrance 39 du deuxième ensemble de moyens de délivrance de sorte qu'il délivre un deuxième ensemble E39 de bits du deuxième mot 33.

Si le deuxième ensemble de bit E61 du mot de déverrouillage 20 est identique au deuxième ensemble E51 de bit de la clé d'accès 18, le deuxième moyen de comparaison 51 pilote le deuxième moyen de délivrance 35 du premier ensemble de moyens de délivrance de sorte qu'il délivre un deuxième ensemble E35 de bits du premier mot 32 et pilote le troisième moyen de délivrance 38 du deuxième ensemble de moyens de délivrance de sorte qu'il délivre un premier ensemble E38 de bits du deuxième mot 33.

Si le troisième ensemble de bit E62 du mot de déverrouillage 20 est identique au troisième ensemble E52 de bit de la clé d'accès 18, le troisième moyen de comparaison 52 pilote le troisième moyen de délivrance 36 du premier ensemble de moyens de délivrance de sorte qu'il délivre un troisième ensemble E36 de bits du premier mot 32 et pilote le deuxième moyen de délivrance 41 du deuxième ensemble de moyens de délivrance de sorte qu'il délivre un quatrième ensemble E41 de bits du deuxième mot 33.

Si le quatrième ensemble de bit E63 du mot de déverrouillage 20 est identique au quatrième ensemble E53 de bit de la clé d'accès 18, le quatrième moyen de comparaison 53 pilote le quatrième moyen de délivrance 37 du premier ensemble de moyens de délivrance de sorte qu'il délivre un quatrième ensemble E37 de bits du premier mot 32 et pilote le premier moyen de délivrance 40 du deuxième ensemble de moyens de délivrance de sorte qu'il délivre un troisième ensemble E40 de bits du deuxième mot 33.

Les premier, deuxième, troisième et quatrième ensembles E34, E35, E36, E37 de bits du premier mot 32 forment le premier mot 32 et les premier, deuxième, troisième et quatrième ensembles E38, E39, E40, E41 de bits du deuxième mot 33 forment le deuxième mot 33.

Les ensembles E34, E35, E36, E37, E38, E39, E40, E41 de bits des premier et deuxième mots 32, 33 délivrés par les moyens de délivrance sont par exemple stockés dans le premier registre 14.

On suppose que le premier ensemble E34 de bits du premier mot 32 comprend par exemple les bits B₆₁, B₆₅, B₆₉, B₇₃, B₇₇, B₈₁, B₈₅, B₈₉ du premier mot 32, le deuxième ensemble E35 de bits du premier mot 32 comprend par exemple les bits B₆₂, B₆₆, B₇₀, B₇₄, B₇₈, B₈₂, B₈₆, B₉₀ du premier mot 32, le troisième ensemble E36 de bits du premier mot 32 comprend par exemple les bits B₆₃, B₆₇, B₇₁, B₇₅, B₇₉, B₈₃, B₈₇, B₉₁ du premier mot 32, et le quatrième ensemble E37 de bits du premier mot 32 comprend par exemple les bits B₆₄, B₆₈, B₇₂, B₇₆, B₈₀, B₈₄, B₈₈, B₉₂ du premier mot 32.

On suppose que le premier ensemble E38 de bits du deuxième mot 33 comprend par exemple les bits B₁₀₁, B₁₀₅, B₁₀₉, B₁₁₃, B₁₁₇, B₁₂₁, B₁₂₅, B₁₂₉ du deuxième mot 33, le deuxième ensemble E39 de bits du deuxième mot 33 comprend par exemple les bits B₁₀₂, B₁₀₆, B₁₁₀, B₁₁₄, B₁₁₈, B₁₂₂, B₁₂₆, B₁₃₀ du deuxième mot 33, le troisième ensemble E40 de bits du deuxième mot 33 comprend par exemple les bits B₁₀₃, B₁₀₇, B₁₁₁, B₁₁₅, B₁₁₉, B₁₂₃, B₁₂₇, B₁₃₁ deuxième mot 33, et le quatrième ensemble E41 de bits du deuxième mot 33 comprend par exemple les bits B₁₀₄, B₁₀₈, B₁₁₂, B₁₁₆, B₁₂₀, B₁₂₄, B₁₂₈, B₁₃₂ deuxième mot 33.

Les bits de chaque ensemble E34, E35, E36, E37, E38, E39, E40, E41 des mots 32, 33 ne se succèdent pas.

Bien entendu, en variante, seuls les bits d'un ensemble ou plusieurs ensemble E34, E35, E36, E37, E38, E39, E40, E41 des mots 32, 33 ne se succède(nt) pas.

Pour obtenir la totalité de la clé de chiffrement/déchiffrement 10, il est nécessaire de remplir quatre conditions différentes.

Il est nécessaire que les bits du premier ensemble de bit E60 du mot de déverrouillage 20 soient identiques aux bits du premier ensemble E50 de bit de la clé d'accès 18 pour obtenir le premier ensemble E34 de bits du premier mot 32 et le deuxième ensemble E39 de bits du deuxième mot 33, que les bits du deuxième ensemble de bit E61 du mot de déverrouillage 20 soient identiques aux bits du deuxième ensemble E51 de bit de la clé d'accès 18 pour obtenir le deuxième ensemble E35 de bits du premier mot 32 et le premier ensemble E38 de bits du deuxième mot 33, que les bits du troisième ensemble de bit E62 du mot de déverrouillage 20 soient identiques aux bits du troisième ensemble E52 de bit de la clé d'accès 18 pour obtenir le troisième ensemble E36 de bits du premier mot 32 et le quatrième ensemble E41 de bits du deuxième mot 33, et que les bits du quatrième ensemble de bit E63 du mot de déverrouillage 20 soient identiques aux bits quatrième ensemble E53 de bit de la clé d'accès 18 pour obtenir le quatrième ensemble E37 de bits du premier mot 32 et le troisième ensemble E40 de bits du deuxième mot 33.

Lors d'une attaque, il est nécessaire de mettre en oeuvre quatre lasers pour forcer la délivrance de la clé 10 par les moyens de délivrance 34, 35, 36, 37, 38, 39, 40, 41 rendant ainsi plus robuste le système de lecture par rapport à système de lecture connu de l'état de la technique.

Tel que décrit précédemment, les mémoires 42, 43, 44, 45, 46, 47, 48, 49 peuvent contenir chacune une série de huit bits s'apparentant chacune à une partie de la clé de chiffrement/déchiffrement 10 de sorte que lorsque l'une des moyens de délivrance 34, 35, 36, 37, 38, 39, 40, 41 est commandé pour relier sa sortie à sa deuxième entrée, ledit moyen de délivrance délivre la série de bits contenue dans la mémoire reliée à ladite deuxième entrée.

Bien entendu, la clé de chiffrement/déchiffrement 10 peut être formée de plus de deux mots, chaque mot comportant plus ou moins trente-deux bits.

## Revendications

1. Procédé de lecture d'une clé de chiffrement/déchiffrement (10) comportant au moins un premier mot (32) comprenant une pluralité de bits (B₃₁, B₃₂, B₃₃, B₃₄, B₃₅, B₃₆, B₃₇, B₃₈, B₆₁, B₉₂) le procédé comportant :
- une première comparaison d'un premier ensemble (E₁) de bit (B₅₁, B₅₃, B₅₅, B₅₇) d'un mot de déverrouillage (20) comportant une pluralité de bits (B₅₁, B₅₂, B₅₃, B₅₄, B₅₅, B₅₆, B₅₇, B₅₈) et d'un premier ensemble (E₁₁) de bit d'une clé d'accès (18), le premier ensemble (E₁₁) de bit (B₄₁, B₄₃, B₄₅, B₄₇) de la clé d'accès (18) comportant au moins un premier bit de la pluralité de bits (B₄₁, B₄₂, B₄₃, B₄₄, B₄₅, B₄₆, B₄₇, B₄₈) du de la clé d'accès,
- une délivrance d'au moins un premier ensemble (E₂₁) de bits (B₃₁, B₃₃, B₃₅, B₃₇) du premier mot de la clé de chiffrement/déchiffrement si le premier ensemble (E₁) de bit du mot de déverrouillage (20) est identique au premier ensemble (E₁₁) de bit de la clé d'accès (18), le premier ensemble (E₂₁) de bits étant choisi parmi la pluralité de bits (B₃₁, B₃₂, B₃₃, B₃₄, B₃₅, B₃₆, B₃₇, B₃₈, B₆₁, B₉₂) du premier mot,
- au moins une deuxième comparaison d'un deuxième ensemble (E₂) de bit (B₅₂, B₅₄, B₅₆, B₅₈) du mot de déverrouillage (20) différent du premier ensemble (E₁) de bit du mot de déverrouillage et d'un deuxième ensemble (E₁₂) de bit (B₄₂, B₄₄, B₄₆, B₄₈) de la clé d'accès (18), le deuxième ensemble (E₁₂) de bit de la clé d'accès (18) comportant au moins un deuxième bit de la pluralité de bits de la clé d'accès différent du premier bit, et
- une délivrance d'au moins un deuxième ensemble (E₂₂) de bits (B₃₂, B₃₄, B₃₆, B₃₈) du premier mot de la clé de chiffrement/déchiffrement si le deuxième ensemble (E₂) de bit du mot de déverrouillage (20) est identique au deuxième ensemble (E₁₂) de bit de la clé d'accès (18), le deuxième ensemble de bits étant choisi parmi la pluralité de bits du premier mot et différents des bits du premier ensemble de bits, la réunion des ensembles de bits du premier mot formant le premier mot.

2. Procédé selon la revendication 1, la clé de chiffrement/déchiffrement (10) comportant au moins un deuxième mot (33) comprenant une pluralité de bits (B₁₀₁, B₁₃₂), le procédé comportant :
- une délivrance d'au moins un premier ensemble de bits du deuxième mot (33) de la clé de chiffrement/déchiffrement (10) lorsque le premier ensemble (E₁) de bit du mot de déverrouillage (20) est identique au premier ensemble (E₁₁) de bit de la clé d'accès (18), le premier ensemble de bits du deuxième mot (33) étant choisi parmi la pluralité de bits du deuxième mot, et
- une délivrance d'au moins un deuxième ensemble de bits du deuxième mot (33) de la clé de chiffrement/déchiffrement (10) si le deuxième ensemble (E₂) de bit du mot de déverrouillage (20) est identique au deuxième ensemble (E₁₂) de bit de la clé d'accès (18), le deuxième ensemble de bits du deuxième mot (33) étant choisi parmi la pluralité de bits du deuxième mot et différents des bits du premier ensemble de bits du deuxième mot (33), la réunion des ensembles de bits du deuxième mot formant le deuxième mot (33) et les premier et deuxième mots formant la clé de chiffrement/déchiffrement (10).

3. Procédé selon la revendication 1 ou 2, dans lequel les bits de d'au moins un ensemble (E₂₁, E₂₂) de bits de la clé de chiffrement/déchiffrement sont choisis de sorte que lesdits bits ne se succèdent pas.

4. Procédé selon l'une des revendications 1 à 3, dans lequel lorsqu'un ensemble (E₁, E₂) de bit du mot de déverrouillage (20) n'est pas identique à un ensemble (E₁₁, E₁₂) de bit de la clé d'accès (18), le procédé comporte une délivrance d'un ensemble de bits prédéterminés ayant la même taille que l'ensemble de bits associé à ladite comparaison.

5. Procédé selon l'une des revendications 1 à 4, dans lequel le premier ensemble (E₁₁) de bit de la clé d'accès (18) comporte le premier bit de la clé d'accès et une première combinaison de bits choisis parmi la pluralité de bits de la clé d'accès (18), les bits de la première combinaison étant différents des premier et deuxième bits de la clé d'accès (18), et le deuxième ensemble (E₁₂) de bit de la clé d'accès (18) comporte le deuxième bit et une deuxième combinaison de bits choisis parmi la pluralité de bits du mot de déverrouillage, les bits de la deuxième combinaison étant différents du premier bit, du deuxième bit et des bits de la première combinaison.

6. Système de lecture d'une clé de chiffrement/déchiffrement (10) comportant au moins un premier mot (32) comprenant une pluralité de bits (B₃₁, B₃₂, B₃₃, B₃₄, B₃₅, B₃₆, B₃₇, B₃₈, B₆₁, B₉₂), le système comportant :
- un premier moyen de comparaison (21, 50) configuré pour comparer un premier ensemble (E₁) de bit (B₅₁, B₅₃, B₅₅, B₅₇) d'un mot de déverrouillage (20) comportant une pluralité de bits (B₅₁, B₅₂, B₅₃, B₅₄, B₅₅, B₅₆, B₅₇, B₅₈) et d'un premier ensemble (E₁₁) de bit (B₄₁, B₄₃, B₄₅, B₄₇) d'une clé d'accès (18), le premier ensemble de bit de la clé d'accès (18) comportant au moins un premier bit de la pluralité de bits (B₄₁, B₄₂, B₄₃, B₄₄, B₄₅, B₄₆, B₄₇, B₄₈) du de la clé d'accès (18),
- un premier moyen de délivrance (12, 34) configuré pour délivrer au moins un premier ensemble (E₂₁) de bits (B₃₁, B₃₃, B₃₅, B₃₇) du premier mot de la clé de chiffrement/déchiffrement (10) si le premier ensemble de bit du mot de déverrouillage (20) est identique au premier ensemble de bit de la clé d'accès (18), le premier ensemble de bits étant choisi parmi la pluralité de bits du premier mot,
- un deuxième moyen de comparaison (22, 51) configuré pour comparer un deuxième ensemble (E₂) de bit (B₅₂, B₅₄, B₅₆, B₅₈) du mot de déverrouillage (20) différent du premier ensemble (E₁) de bit du mot de déverrouillage et d'un deuxième ensemble (E₁₂) de bit de la clé d'accès (18), le deuxième ensemble de bit de la clé d'accès (18) comportant au moins un deuxième bit de la pluralité de bits de la clé d'accès différent du premier bit, et
- un deuxième moyen de délivrance (13, 35) configuré pour délivrer au moins un deuxième ensemble (E₂₂) de bits (B₃₂, B₃₄, B₃₆, B₃₈) du premier mot de la clé de chiffrement/déchiffrement si le deuxième ensemble (E₂) de bit du mot de déverrouillage (20) est identique au deuxième ensemble (E₁₂) de bit de la clé d'accès (18), le deuxième ensemble de bits étant choisi parmi la pluralité de bits du premier mot et différents des bits du premier ensemble de bits, la réunion des ensembles de bits du premier mot formant le premier mot.

7. Système selon la revendication 6, la clé de chiffrement/déchiffrement (10) comportant au moins un deuxième mot (33) comprenant une pluralité de bits (B₁₀₁, B₁₃₂), le système comportant :
- un troisième moyen de délivrance (38) configuré pour délivrer au moins un premier ensemble (E₃₈) de bits du deuxième mot (33) de la clé de chiffrement/déchiffrement (10) si le premier ensemble (E₁) de bit du mot de déverrouillage est identique au premier ensemble de bit de la clé d'accès, le premier ensemble de bits étant choisi parmi la pluralité de bits du premier mot, et
- un quatrième moyen de délivrance (39) configuré pour délivrer au moins un deuxième ensemble (E₃₉) de bits du deuxième mot (33) de la clé de chiffrement/déchiffrement (10) si le deuxième ensemble (E₂) de bit du mot de déverrouillage (20) est identique au deuxième ensemble (E₁₂) de bit de la clé d'accès (18), le deuxième ensemble de bits étant choisi parmi la pluralité de bits du premier mot et différents des bits du premier ensemble de bits, la réunion des ensembles de bits du deuxième mot formant le premier mot.

8. Système selon la revendication 6 ou 7, dans lequel les bits d'au moins un ensemble de bits de la clé de chiffrement/déchiffrement (10) sont choisis de sorte que lesdits bits ne se succèdent pas.

9. Système selon l'une des revendications 6 à 8, dans lequel au moins un moyen de délivrance (12, 13, 34, 35, 36, 37, 38, 39, 40) est configuré pour délivrer un ensemble de bits prédéterminés lorsque l'ensemble de bit du mot de déverrouillage (20) associé audit moyen de délivrance n'est pas identique à un ensemble de bit de la clé d'accès (18), l'ensemble de bits prédéterminés ayant la même taille que l'ensemble de bits associé à ladite comparaison.

10. Système selon l'une des revendications 6 à 9, dans lequel le premier ensemble (E₁₁) de bit de la clé d'accès (18) comporte le premier bit de la clé d'accès et une première combinaison de bits choisis parmi la pluralité de bits de la clé d'accès (18), les bits de la première combinaison étant différents des premier et deuxième bits de la clé d'accès (18), et le deuxième ensemble (E₁₂) de bit de la clé d'accès (18) comporte le deuxième bit et une deuxième combinaison de bits choisis parmi la pluralité de bits du mot de déverrouillage, les bits de la deuxième combinaison étant différents du premier bit, du deuxième bit et des bits de la première combinaison.
